# EUROPÄISCHE PATENTSCHRIFT

(11) **EP 1 925 872 B1**
(45) Veröffentlichungstag und Bekanntmachung des Hinweises auf die Patenterteilung: **27.04.2016**
(21) Anmeldenummer: 07103493.8
(22) Anmeldetag: 05.03.2007
(51) Int. Cl.: F16T 1/00, F16T 1/18, F16T 1/38, F16T 1/08

(54) **Kondensatableiter**
Steam trap
Déflecteur de condensation

(30) Priorität: 01.09.2006 DE 102006041132
(43) Veröffentlichungstag der Anmeldung: 28.05.2008
(73) Patentinhaber: AWH Armaturen-Werk Halle GmbH, 06110 Halle/Saale (DE)
(72) Erfinder: Weiss, Willi, 06118 Halle (DE); Krös, Mario, 06126 Halle (DE)
(74) Vertreter: Dantz, Jan Henning

(56) Entgegenhaltungen:
- DE-A1- 2 615 811
- DE-A1- 2 852 793
- DE-C- 840 247
- US-A- 5 881 766

## Beschreibung

Die vorliegende Erfindung betrifft einen Kondensatableiter mit einem Gehäuse, in dem eine Durchflussleitung mit einem Eingangskanal und einem Ausgangskanal ausgebildet ist, von der mindestens ein Ablasskanal abzweigt, wobei an dem Gehäuse ein Regelelement montiert ist.

Es sind Kondensatableiter bekannt, die meist an eine Leitung angeschlossen sind, an der Absperrventile, Schaugläser und Rückschlagklappen vorgesehen sind. Bei Wartungsarbeiten an einem Kondensatableiter muss die gesamte Kondensatleitung außer Betrieb gesetzt werden. Dabei gestaltet sich die Montage der Kondensatableitung und das Auswechseln einzelner Elemente aufwendig, was zu hohen Stillstandszeiten führt.

Die DE 26 15 811 A1 offenbart eine Absperreinrichtung für einen Kondensatableiter, bei der ein Kondensatableiter auf einer Seite mit einem ersten Ventil und auf einer gegenüberliegenden Seite mit einem zweiten Ventil über Schweißverbindungen angeschlossen ist. Dadurch kann der Kondensatableiter bei Bedarf stillgelegt werden. Ferner ist an den Ventilen ein Kurzschlusskanal zur Umgehung des Kondensatableiters angeschweißt. Die Verbindung der einzelnen Bauteile erfordert daher zahlreiche Montageschritte.

Die US 5,881,766 offenbart einen Verteiler für Dampf oder Kondensat, bei dem in einem Gehäuse ein Eingangskanal mit einem Einlassventil und ein Ausgangskanal mit einem Auslassventil vorgesehen sind. Ferner können an dem Gehäuse noch weitere Auslässe und Ventile vorgesehen sein.

Es ist daher Aufgabe der vorliegenden Erfindung einen Kondensatableiter zu schaffen, der bei kompaktem Aufbau mehrere Funktionen besitzt.

Erfindungsgemäß wird ein Kondensatableiter bereitgestellt, bei dem im Bereich der Durchflussleitung an dem Gehäuse mindestens ein Absperrventil vorgesehen ist. Dadurch kann der Kondensatableiter neben der Funktion des Ableitens von Kondensat entsprechend dem Regelelement auch abgesperrt werden, so dass die Leitung für Wartungs- und Reparaturarbeiten unterbrochen ist. Dadurch entstehen kurze Arbeitswege und bei der Montage brauchen Kondensatableiter und Absperrventile nicht hintereinander montiert zu werden.

Gemäß der Erfindung ist ein Absperrventil im Eingangskanal und ein Absperrventil im Ausgangskanal angeordnet. Dadurch kann das im Gehäuse angeordnete Regelelement bei Bedarf drucklos geschaltet werden. Insbesondere kann das Regelelement an einer Öffnung des Gehäuses austauschbar montiert sein, so dass nach Betätigung der beiden Absperrventile das Regelelement auf einfache Weise ausgetauscht werden kann.

Für eine besonders kompakte Bauweise ist an dem Gehäuse eine Kammer ausgebildet, die mit dem Eingangskanal, dem Ausgangskanal und dem Ablasskanal verbunden ist, wobei in der Kammer auch das Regelelement angeordnet ist. Dadurch können die verschiedenen Funktionen des Kondensatableiters bei begrenztem Bauraum realisiert werden. Das Regelelement kann dabei den Durchgangskanal temperaturabhängig öffnen und schließen, wobei je nach Einsatzzweck die Durchflussmenge und die Temperatur zur Auslösung des Regelelementes gewählt werden kann.

Für eine einfache Montage kann das Regelelement einen an dem Gehäuse festgelegte Verschlusskappe aufweisen. Dann kann das Regelelement auf einfache Weise in das Gehäuse eingeschraubt und über die Verschlusskappe abgedichtet werden.

Um einen zentralen Bereich des Kondensatableiters drucklos halten zu können, kann in dem Ablasskanal ein Ablassventil angeordnet sein, das bei Bedarf geöffnet wird.

Die Absperrventile lassen sich einfach montieren, wenn in das Gehäuse Ventileinsätze eingeschraubt sind, die dann durch einen bewegbaren Ventilkörper abgedichtet werden können. Die Absperrventile können dabei für eine Anordnung mit geringem Raumbedarf mit ihren Längsachsen winklig zueinander angeordnet sein, beispielsweise in einem Bereich zwischen 20° und 120°, so dass die Ventilsitze dicht beieinander angeordnet sein können.

Die Erfindung wird nachfolgend anhand eines Ausführungsbeispieles mit Bezug auf die beigefügten Zeichnungen näher erläutert. Es zeigen:
- Figur 1: eine geschnittene Ansicht durch einen erfindungsgemäßen Kondensatableiter;
- Figur 2: eine Draufsicht auf den Kondensatableiter der Figur 1;
- Figur 3: eine Draufsicht auf den Kondensatableiter der Figur 1 mit Varianten beim Einbau des Regelelementes, und
- Figur 4: eine geschnittene Detailansicht eines modifizierten Absperrventils.

Ein Kondensatableiter 1 umfasst ein Gehäuse 2, das als Gussteil ausgebildet ist und eine Durchflussleitung aufweist, die einen Eingangskanal 3 und einen Ausgangskanal 4 umfasst. An dem Eingangskanal 3 ist ein Flanschabschnitt 5 zur Verbindung mit einer Eingangsleitung und an dem Ausgangskanal 4 ist ein weiterer Flanschabschnitt 6 zur Verbindung mit einer Ausgangsleitung vorgesehen.

Sowohl am Eingangskanal 3 als auch am Ausgangskanal 4 ist ein Absperrventil montiert, mittels dem die Durchflussleitung unterbrochen werden kann. Jedes Absperrventil umfasst einen Ventilsitz 7, der in das Gehäuse 2 eingeschraubt ist. Das Absperrventil umfasst ferner eine Spindel 9, an deren Endabschnitt ein Ventilkörper 10 ausgebildet ist. Die Spindel 9 ist entlang von Dichtungen 8 axial beweglich gelagert, wobei die Dichtungen 8 an einem weiteren Einsatz 11 angeordnet sind, der ebenfalls mit dem Gehäuse 2 verschraubt ist. Über die axiale Bewegung der Spindel 9 kann die Durchflussleitung über den Ventilkörper 10 wahlweise geöffnet oder geschlossen werden.

Von dem Eingangskanal 3 kann ein Fluid durch den Ventilsitz 7 zu einer Querbohrung 12 strömen. Diese Querbohrung 12 mündet in einer Kammer 13, in der ein Regelement 21 angeordnet ist. Das Fluid kann dann ferner durch das Regelelement 21 über einen Innenraum 14 durch eine Bohrung 20 zu dem zweiten Absperrventil strömen, bei dem es durch einen Ventilsitz 7 in den Ausgangskanal 4 gelangen kann.

Ferner ist an dem Gehäuse 2 ein Ablasskanal 16 ausgebildet, der über eine Ablassbohrung 15 mit dem Innenraum 13 verbunden ist. An dem Ablasskanal 16 ist ein Ablassventil montiert, das mit einem Ventileinsatz 17 in das Gehäuse 2 eingeschraubt ist und einen Ventilkörper 18 sowie eine Druckschraube 19 aufweist. Durch Herausdrehen der Druckschraube 19 kann die Kammer 13 drucklos gehalten werden.

Um den Durchfluss an dem Gehäuse 2 zu stoppen, kann wahlweise das erste Absperrventil oder das zweite Absperrventil betätigt werden. Falls das Regelelement 21 gewartet oder ausgetauscht werden soll, werden beide Absperrventile geschlossen und durch die Druckschraube 19 und das Gehäuse 2 im Bereich der Kammer 13 kann das enthaltene Fluid abgelassen werden. Anschließend können Wartungs- und Reparaturarbeiten durchgeführt werden, beispielsweise an dem Regelelement 21.

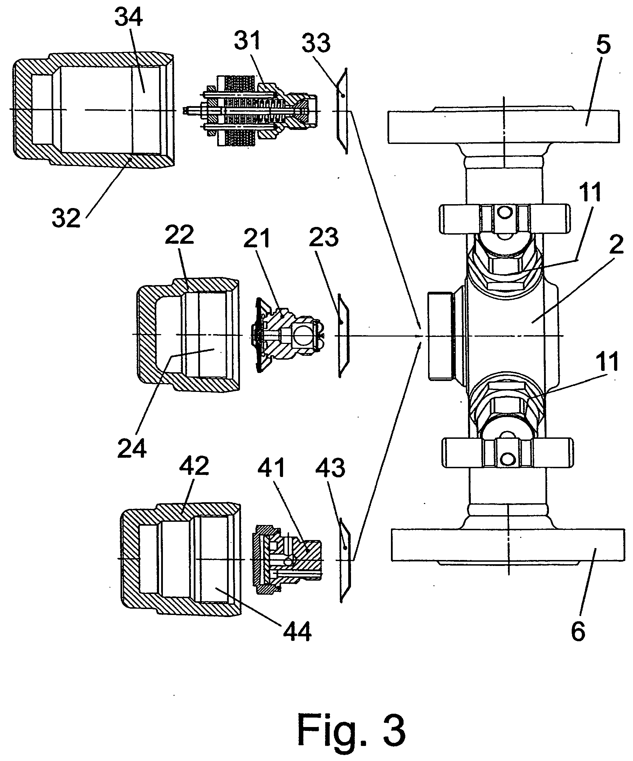

In Figur 3 sind unterschiedliche Ausführungen des Kondensatableiters gezeigt, bei denen das Regelement 21 austauschbar ist. Das Regelelement 21 ist an dem Gehäuse 2 montiert, wobei für eine lange Lebensdauer ein Sieb 23 vorgesehen ist, so dass das Regelement 21 nicht so schnell verschmutzen kann. Das Regelelement 21 ist nach außen von einer Verschlusskappe 22 umgeben, die einen Innenraum 24 für das Regelelement 21 ausbildet. Das Regelelement 21 ist in dem dargestellten Ausführungsbeispiel eine Membrankapsel.

Für andere Einsatzzwecke können andere Regelelement eingesetzt werden. Die Regelelemente können auf einfache Weise durch Öffnen der Verschlussklappe 22 ausgetauscht werden.

Beispielsweise kann ein Regelelement 31 als Bimetallelement ausgebildet sein, das benachbart zu einem Sieb 33 an dem Gehäuse 2 montiert ist. Da das Bimetallelement 31 eine größere Länge aufweist, wird dieses in einer modifizierten Verschlussklappe 32 mit größerem Innenraum 34 aufgenommen. Im übrigen kann das Regelelement 31 ebenfalls mit dem Gehäuse 2 verschraubt werden, genauso wie die Verschlusskappe 32.

Nach einer weiteren Alternative kann ein thermodynamisch arbeitendes Regelelement 41 vorgesehen sein, dass ebenfalls über ein Sieb 43 an dem Gehäuse 2 montiert wird. Das Regelement 41 lässt sich mit dem Gehäuse 2 verschrauben und kann in einem Innenraum 44 einer modifizierten Verschlussklappe 42 aufgenommen werden. Insofern können an dem Kondensatableiter auf einfache Weise unterschiedliche Regelemente 21, 31 und 41 zum Einsatz kommen, die eine an die Bauform angepasste Verschlussklappe 22, 32 und 42 aufweisen.

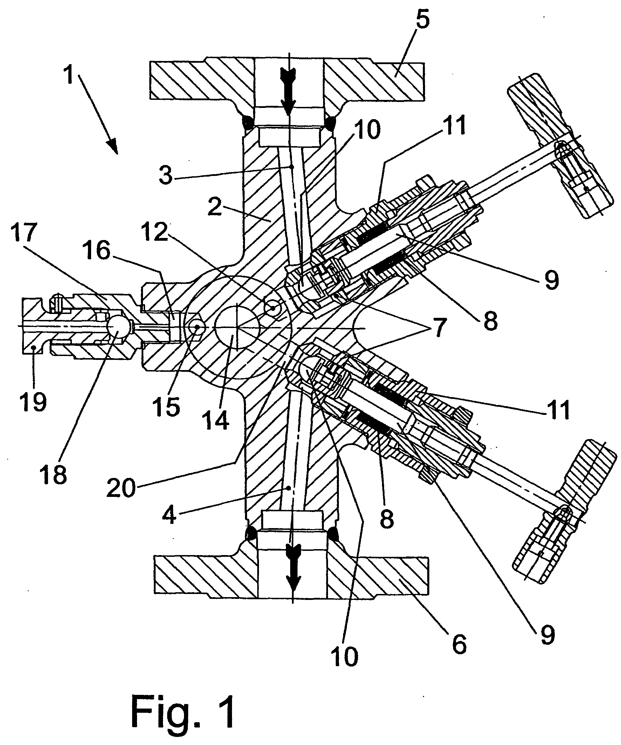

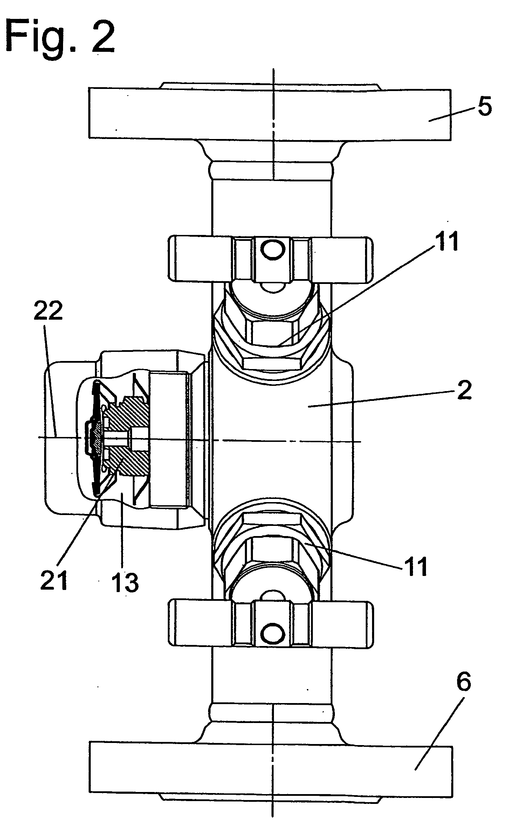

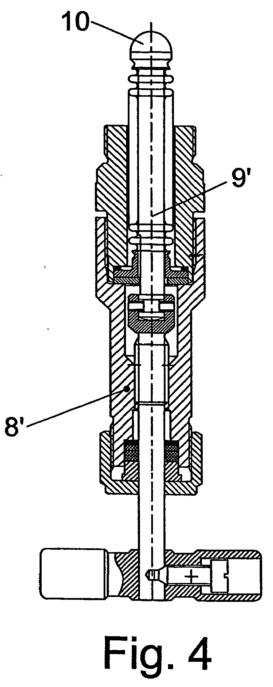

Bei dem Ausführungsbeispiel der Figuren 1 bis 3 sind die Absperrventile in Stopfbuchsausführung ausgebildet. Es ist auch möglich, andere Absperrventile einzusetzen, beispielsweise ist in Figur 4 ein modifiziertes Absperrventil in Faltenbalgausführung gezeigt. Das Absperrventil weist eine Spindel 9' auf, die mit einem vorderen Endabschnitt einen Ventilkörper 10 ausbildet, der mit dem Ventilsitz 7 zusammenwirkt. Die Spindel 9 ist wiederum in einem modifizierten Ventileinsatz 8' geführt.

Die Absperrventile sind mit ihrer Längsachse in einem Winkel angeordnet, so dass die vorderen Endabschnitte mit den Ventilsitzen benachbart angeordnet sind und somit eine kompakte Bauweise gegeben ist. Der Winkel zwischen den Längsachsen der Stangen der Absperrventile liegt in einem Bereich zwischen 20° und 120°, vorzugsweise etwa zwischen 30° und 60°.

Die Abdichtung der Ventileinsätze und Regelelemente sowie Verschlussklappen erfolgt hartdichtend, mit jeweils zwei metallischen Kontaktflächen.

Der Einbau des Kondensatableiters 1 kann sowohl horizontal als auch vertikal erfolgen. Die eingesetzten Werkstoffe können an den jeweiligen Verwendungszweck angepasst sein.

## Patentansprüche

1. Kondensatableiter mit einem Gehäuse (2), in dem eine Durchflussleitung mit einem Eingangskanal (3) und einem Ausgangskanal (4) ausgebildet ist, von der mindestens ein Ablasskanal (16) abzweigt, wobei an dem Gehäuse (2) ein Regelelement (21, 31, 41) montiert ist, **dadurch gekennzeichnet, dass** das Gehäuse (2) als Gussteil ausgebildet ist und ein Absperrventil (7-11) mit einem Ventileinsatz (11) im Eingangskanal (3) und ein Absperrventil (7-11) mit einem Ventileinsatz (11) im Ausgangskanal (4) angeordnet ist, und die Ventileinsätze (11) hartdichtend mit jeweils zwei metallischen Kontaktflächen abgedichtet an dem Gehäuse (2) montiert sind, wobei eine Kammer (13) an dem Gehäuse (2) ausgebildet ist, die mit dem Eingangskanal (3), dem Ausgangskanal (4) und dem Ablasskanal (16) verbunden ist und in der das Regelelement (21, 31, 41) angeordnet ist.

2. Kondensatableiter nach Anspruch 1, **dadurch gekennzeichnet, dass** das Regelelement (21, 31, 41) austauschbar an einer Öffnung des Gehäuses (2) gehalten ist.

3. Kondensatableiter nach einem der Ansprüche 1 oder 2, **dadurch gekennzeichnet, dass** das Regelelement (21, 31, 41) den Durchgangskanal temperaturabhängig öffnet und schließt.

4. Kondensatableiter nach einem der Ansprüche 1 bis 3, **dadurch gekennzeichnet, dass** das Regelelement (21, 31, 41) eine an dem Gehäuse (2) festgelegte Verschlussklappe (22, 32, 42) aufweist.

5. Kondensatableiter nach einem der Ansprüche 1 bis 4, **dadurch gekennzeichnet, dass** an dem Ablasskanal (16) ein Ablassventil (17, 18, 19) angeordnet ist.

6. Kondensatableiter nach einem der Ansprüche 1 bis 5, **dadurch gekennzeichnet, dass** die Absperrventile Absperrventileinsätze (7) aufweisen, die in das Gehäuse (2) eingeschraubt sind.

7. Kondensatableiter nach einem der Ansprüche 1 bis 6, **dadurch gekennzeichnet, dass** die Absperrventile (7-11) mit ihren Längsachsen winklig zueinander angeordnet sind, vorzugsweise in einem Bereich zwischen 20° und 120°.

## Claims

1. A condensate trap, comprising a housing (2) in which a flow line is formed with an inlet channel (3) and an outlet channel (4), from which at least one drain channel (16) branches off, wherein a controlling element (21, 31, 41) is mounted on the housing (2), **characterized in that** the housing (2) is formed as a cast component, and a stop valve (7 to 11) with a valve insert (11) is arranged in the inlet channel (3) and a stop valve (7 to 11) with a valve insert (11) is arranged in the outlet channel (4), and the valve inserts (11) are mounted in a hard-sealing manner with two respective metallic contact surfaces in a sealed manner on the housing (2), wherein one chamber (13) is formed on the housing (2), which chamber is connected to the inlet channel (3), the outlet channel (4) and the drain channel (16) and in which the controlling element (21, 31, 41) is arranged.

2. A condensate trap according to claim 1, **characterized in that** the controlling element (21, 31, 41) is exchangeably held on an opening of the housing (2).

3. A condensate trap according to one of the claims 1 or 2, **characterized in that** the controlling element (21, 31, 41) opens and closes the flow line in a temperature-dependent manner.

4. A condensate trap according to one of the claims 1 to 3, **characterized in that** the controlling element (21, 31, 41) comprises a closing flap (22, 32, 42) which is fixed to the housing (2).

5. A condensate trap according to one of the claims 1 to 4, **characterized in that** a drain valve (17, 18, 19) is arranged on the drain channel (16).

6. A condensate trap according to one of the claims 1 to 5, **characterized in that** the stop valves comprise top valve inserts (7) which are screwed into the housing (2).

7. A condensate trap according to one of the claims 1 to 6, **characterized in that** the stop valves (7 to 11) are arranged with their longitudinal axes angularly with respect to each other, preferably in a range of between 20° and 120°.

## Revendications

1. Purgeur de condensation avec un corps (2) dans lequel est formée une conduite de circulation avec un canal d'entrée (3) et un canal de sortie (4) duquel part au moins un canal d'évacuation (16), un élément de régulation (21, 31, 41) étant monté sur le corps (2), **caractérisé en ce que** le corps (2) est conformé comme une pièce en fonte et une vanne d'isolement (7-11) avec une garniture de vanne (11) est disposée dans le canal d'entrée (3) et une vanne d'isolement (7-11) avec une garniture de vanne (11) dans le canal de sortie (4), et les garnitures de vanne (11) sont montées sur le corps (2) de façon étanche avec une étanchéité dure contre deux surfaces de contact métalliques pour chacune, une chambre (13) qui communique avec le canal d'entrée (3), le canal de sortie (4) et le canal d'évacuation (16) et dans laquelle l'élément de régulation (21, 31,41) est disposé étant formée sur le corps (2).

2. Purgeur de condensation selon la revendication 1, **caractérisé en ce que** l'élément de régulation (21, 31, 41) est retenu de façon interchangeable sur une ouverture du corps (2).

3. Purgeur de condensation selon l'une des revendications 1 ou 2, **caractérisé en ce que** l'élément de régulation (21, 31, 41) ouvre et ferme le canal de circulation en fonction de la température.

4. Purgeur de condensation selon l'une des revendications 1 à 3, **caractérisé en ce que** l'élément de régulation (21, 31, 41) présente un clapet d'obturation (22, 32,42) fixé au corps (2).

5. Purgeur de condensation selon l'une des revendications 1 à 4, **caractérisé en ce qu'**une vanne d'évacuation (17, 18, 19) est disposée sur le canal d'évacuation (16).

6. Purgeur de condensation selon l'une des revendications 1 à 5, **caractérisé en ce que** les vannes d'isolement présentent des garnitures de vanne d'isolement (7) qui sont vissées dans le corps (2).

7. Purgeur de condensation selon l'une des revendications 1 à 6, **caractérisé en ce que** les vannes d'isolement (7-11) sont disposées de façon que leurs axe longitudinaux forment un axe les uns par rapport aux autres, de préférence compris entre 20° et 120°.
